# EUROPEAN PATENT APPLICATION

(11) **EP 2 341 418 A1**
(43) Date of publication of application: **06.07.2011**
(21) Application number: 09252931.2
(22) Date of filing: 31.12.2009
(51) Int. Cl.: G06F 3/048

(54) **Device and method of control**

(71) Applicant: Sony Computer Entertainment Europe Limited, London W1F 7LP (GB)
(72) Inventor: The designation of the inventor has not yet been filed
(74) Representative: Turner, James Arthur

(57) **Abstract**

A portable electronic device comprises a first touch sensitive surface on a first, front side of the device and a second touch sensitive surface on a second, rear side of the device substantially opposite the first side, movement detection means arranged in operation to detect movement of touch across each of the first and second touch sensitive surfaces, and input parsing means arranged in operation to categorise an input in response to a correlation between the respective detected movements of touch across each of the first and the second touch sensitive surfaces.

## Description

The present invention relates to a device and a method of control.

A trend among current portable or pocketable devices such as mobile phones, so-called 'smart-phones', music players, videogames and the like is to become both smaller and provide more features over time. This may be in the form of so-called 'convergence', where, for example, mobile phones now frequently incorporate still or video cameras, or where media players are also capable of playing some video games. Alternatively or in addition, the range of features provided by a particular type of device may increase as implementations of existing device features become more complex.

In either case, one consequence is that the user interface of the device itself also becomes more complex to accommodate control of ever more features. A common approach has therefore been to adopt touch-screens, which have the advantage that controls for different functions are simply graphics to be displayed temporarily on the screen, and hence the physical size of the device no longer imposes a limit on the number of controls possible.

Typically the user interacts with such a touch screen by holding the device in one hand and moving a finger of their other hand around the screen, tapping on icons or other controls displayed by the device to issue commands to the device.

However, the need to navigate the screen, and in particular the need to release contact from the screen in order to tap a selection into it, make it difficult to hold and control such a device conveniently.

The present invention seeks to address or mitigate this problem.

In a first aspect of the present invention, a portable electronic device comprises a first touch sensitive surface on a first, front side of the device and a second touch sensitive surface on a second, rear side of the device substantially opposite the first side, movement detection means arranged in operation to detect movement of touch across each of the first and second touch sensitive surfaces, and input parsing means arranged in operation to categorise an input in response to a correlation between the respective detected movements of touch across each of the first and the second touch sensitive surfaces.

In another aspect of the present invention, a method of controlling a portable electronic device comprising a first touch sensitive surface on a first, front side of the device and a second touch sensitive surface on a second, rear side of the device substantially opposite the first side comprises the steps of detecting movements of touch on each of the first and second touch sensitive surfaces, and categorising an input in response to a correlation between the respective detected movements of touch on each of the first and the second touch sensitive surfaces.

Advantageously, embodiments of the present invention therefore enable control of a device by how motion on the front and rear of the device is correlated; this allows control without the need to break contact with either side of the device, thereby assisting with single-handed control.

Further respective aspects and features of the invention are defined in the appended claims.

Embodiments of the present invention will now be described by way of example with reference to the accompanying drawings, in which:
Figures 1A and 1B are schematic diagrams of an entertainment device in accordance with an embodiment of the present invention.
Figure 2 is a schematic diagram of an entertainment device in accordance with an embodiment of the present invention.
Figure 3 is a schematic diagram of an entertainment device in accordance with an embodiment of the present invention.
Figures 4A to 4C are schematic diagrams of uses of an entertainment device in accordance with an embodiment of the present invention.
Figure 5 is a schematic diagram of a use of an entertainment device in accordance with an embodiment of the present invention.
Figures 6A to 6D are schematic diagrams of uses of an entertainment device in accordance with an embodiment of the present invention.
Figures 7A to 7B are schematic diagrams of uses of an entertainment device in accordance with an embodiment of the present invention.
Figure 8 is a flow diagram of a method of control in accordance with an embodiment of the present invention.

A device and a method of control are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

In an example embodiment of the present invention, a portable electronic device comprises a touch-screen display on a first, front side of the device, and a touch panel on a second, rear side of the device substantially opposite the first side. The touch screen and the touch panel are of a similar size and have a similar placement on their respective sides of the device, such that they are substantially coincident along an axis normal to the first and second sides of the device. In other words, in normal use the touch panel is positioned behind the display and is basically the same size, shape and orientation.

Consequently, the device can detect touch and touch-based inputs from both the front and rear touch surfaces. In addition to interpreting these separately, however, the device can also interpret such inputs together, with the correlation (or lack of correlation) between front and rear touch inputs itself signifying an input or modifying an interpretation of an input.

Thus, for example, when navigating through a film being played by the device, if the user pushes fingers along both touch surfaces in the same direction, this can be interpreted as a command to shuttle though the film in that direction; but when the user moves fingers over each touch surface in substantially the opposite direction to each other, this can be interpreted as a command to skip a chapter.

In another example, using opposing finger motions on the front and back surfaces (which to the user feels like a twisting or dialling action) can be used to scroll through a menu of options, whilst only moving one finger can be used to signal selection of the currently highlighted option. Alternatively or in addition, moving both fingers in the same direction can be used to navigate up or down a menu hierarchy (depending on the direction used).

In this way, the user can navigate and control the device without ever letting go of it to tap the screen, and hence can do so more easily with just one hand.

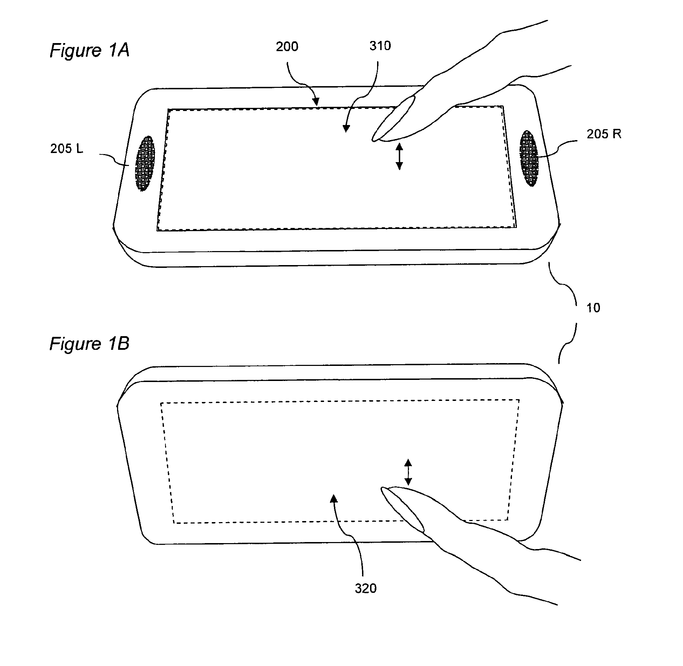

Figures 1A and 1B illustrate an embodiment of a portable electronic device (PED) 10. Figure 1A shows a notional front or top side or face of the PED, whilst Figure 1B shows a notional rear or bottom side or face of the PED. The front and rear sides are substantially parallel to each other.

On the front side, the PED comprises a display 200 and optionally one or more loudspeakers 205L, 205R.

On the rear side, the PED comprises a rear touch sensitive surface 320 (indicated by the dotted lines) having similar dimensions to the display 200. The rear touch sensitive surface is positioned so as to be substantially aligned with, and therefore substantially opposite, the display. That is to say, considered in a direction normal to the plane of the display, the rear touch sensitive panel substantially overlies the display.

A transparent front touch sensitive surface 310 (indicated by the dotted lines in Figure 1A) is also provided coincident with the display 200. The front and rear touch sensitive surfaces and the display thus have similar dimensions and placements on their respective sides of the device. The touch sensitive surfaces also have a similar resolution of touch localisation.

In the description below, the term "front touch screen" (315) will be used to refer to the combination of the front touch sensitive surface 310 and the display 200. Incidentally, for the correlation functionality to be described below, in fact the display is not strictly necessary, but the device becomes much more useful to the user if at least one of the touch sensitive surfaces is associated with the display.

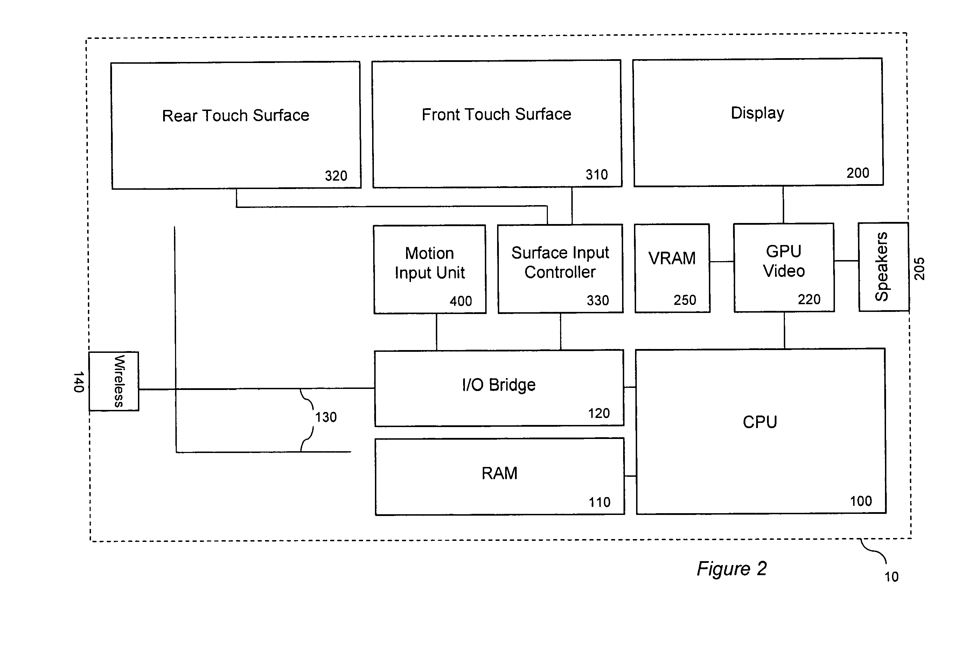

Referring now to Figure 2, an embodiment of the PED comprises a central processor (CPU) 100 coupled to random access memory (RAM) 110, and optionally to a read only memory (not shown). In addition the CPU communicates with a graphics processing unit (GPU) 220. The GPU has access to video RAM (VRAM) 250. The GPU outputs audio to loudspeakers 205L,R (only one shown for clarity) and/or to a headphone jack socket (not shown). The GPU also outputs video information to the display 200. The display is typically a liquid crystal display (LCD) but may be an organic light emitting diode display (OLED) or similar suitable display technology.

In addition, the CPU communicates with an input / output bridge (I/O bridge) 120 that co-ordinates communication with peripheral components both integral to and linkable with the PED. In an embodiment of the PED the I/O bridge communicates with a surface input controller 330, which acts as a movement detector and to parse inputs from the rear touch sensitive surface 320 and the transparent front touch sensitive surface 310 in order to detect movements of touch across each of the two surfaces. The I/O bridge also communicates with an optional motion input unit 400 comprising one or more micro electromechanical (MEMs) accelerometers and/or gyroscopes, to provide up to six axes of motion input (x, y and z axis lateral movement and roll, pitch and yaw rotational movement). The I/O bridge also communicates with a bus 130, upon which various peripheral devices may be linked, including one or more wireless communication units 140, such as for example WiFi and / or Bluetooth ® communication units.

It will be appreciated that the CPU 100 may be a single core or multi core processor. Similarly, the RAM may be dynamic RAM or may comprise both dynamic RAM and static (e.g. flash) RAM units. Likewise, whilst the GPU typically uses dedicated VRAM, alternatively or in addition it may share common RAM with the CPU. Finally, it will be appreciated that the function of the surface input controller 330 may be performed by the CPU itself.

The rear touch sensitive surface may be a conventional capacitance touchpad or panel such as that found in laptop computers or portable telephones. Such a touchpad typically comprises two layers of parallel conductive lines separated by an insulator and arranged at right angles to one another. A high frequency signal is swept through every respective pairing of lines between the two layers. The measurable current for each pair is then proportional to the capacitance at their point of intersection. When a user's finger is placed at or near that intersection, however, some of the electrical field between layers is shunted to ground, changing the effective capacitance and hence the measured current. Precise localisation of the user's finger can be achieved by measuring changes in capacitance at nearby points of intersection, which will be proportional to their respective distances from the finger. So-called multi-touch operation of the touchpad can be achieved by detecting distinct peaks in capacitance change at separate intersection points on the pad. Meanwhile, movement of a user's finger or fingers can be estimated from successive points of intersection where contact is detected.

A front touch sensitive surface for use with the display operates in a similar manner to the rear touch sensitive surface, but in this instance the conductive lines are typically transparent (as a non limiting example, being formed by a deposition of indium tin oxide), and the insulator between two layers is provided by all or part of the display window (e.g. a glass layer); typically a further transparent protective layer is then provided on top of the upper conductive layer.

It will be appreciated however that any suitable touch sensitive technique may be used for either touch panel.

It will also be appreciated that whilst not shown in the Figures for the purposes of clarity, the PED comprises power distribution lines to various components and one or more sources of power, such as an input socket (for example a conventional DC power socket, or alternatively or in addition a USB socket). Such an input socket may also be used to charge one or more batteries (also not shown). Such batteries may be user removable or may be sealed in the device. Other components not shown include, for example, an optional microphone.

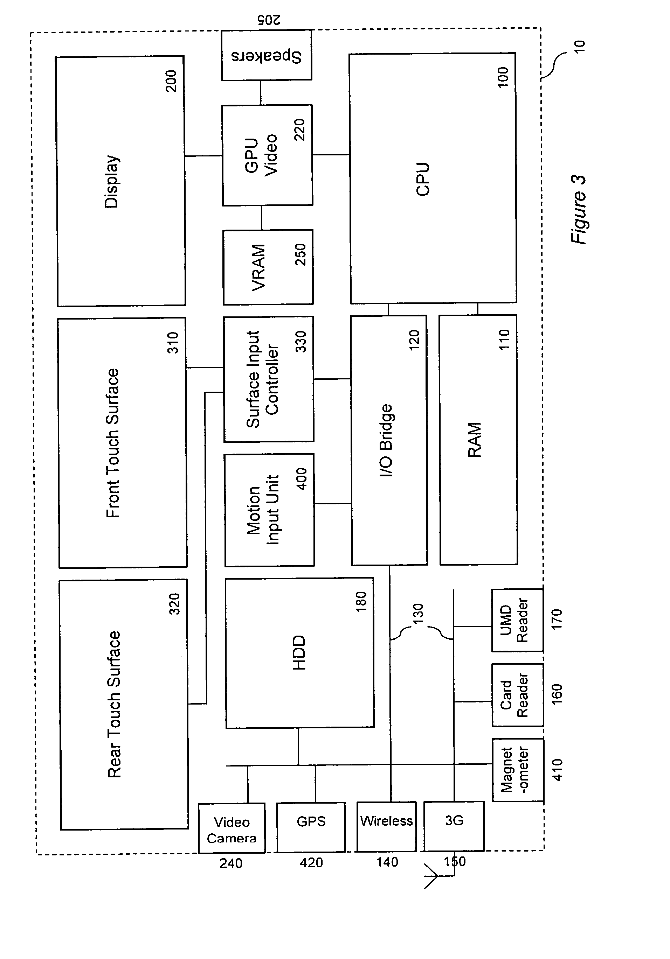

Referring now also to Figure 3, an embodiment of the PED may comprise one or more additional components, either integrated within the device or connectable to it. The additional components include, but are not limited to, the following.
a) A card reader 160 suitable for reading from and optionally writing to memory cards, such as a Sony ® Memory Stick ® card, or alternatively legacy memory cards such as those used by the Sony ® Playstation 2 ® entertainment device. Such a reader may be integral to the PED or may connect to the bus 130 via a USB connection.
b) A universal media disk (UMD) reader 170 or other optical disk reader (such as a DVD or Blu-Ray® disk reader), for accessing media and/or game content stored thereon. Such a reader may be removably connectable to the bus 130 via a USB or proprietary connection.
c) A magnetometer 410 for determining compass direction (i.e. the current absolute orientation of the PED), mounted integral to the PED either on the bus 130 or as part of the motion input unit 400.
d) A third generation (3G) or other mobile telephony module 150. in an embodiment, the module and aerial are integral to the PED, and optionally the aerial is shared with or otherwise coupled electromagnetically with other wireless units in the device for the purpose of transmission and reception. Alternatively the module may be removably connectable to the PED, for example via USB port or a Personal Computer Memory Card International Association (PCMCIA) slot.
e) A hard disk drive (HDD) 180 integral to the PED, providing bulk storage for audio / video media, downloaded games, and the like.
f) A GPS receiver 420. Again the GPS receiver may share an aerial with one or more other wireless units (such as WiFi) within the PED or may use its own aerial. Map information, where used, may be stored locally at the receiver, or in flash RAM of the PED, or on an HDD of the PED.
g) A video camera 240, typically comprising a charge coupled device (CCD) optical sensor and suitable optics for imaging onto the CCD. The resolution of the CCD may for example be 640x480 pixels, but may be any suitable resolution, such as for example 1920x1080 pixels (full HD). In an embodiment the video camera is integral to the PED, but alternatively may be removably connectable to the bus 130 via a USB or proprietary connection. An embodiment of the PED comprises two such video cameras 240, forming a stereoscopic pair.

In operation, the CPU accesses an operating system that is resident for example on a ROM, flash RAM or a hard disk. The operating system co-ordinates operation of the various functions of the PED and presents a user interface to a user of the device. The user interface will typically comprise graphical outputs via the display and touch based inputs, but may also include audio outputs and/or motion-based inputs.

The touch based inputs to the PED are peculiar to the arrangement of a display on the front of the PED and a correspondingly positioned touch sensitive surface (or 'panel') on the rear of the PED. This allows the user to treat the rear panel as a proxy for the display (in other words, address actions and inputs to the rear touch panel as if to the display, and/or point to the rear panel in order to point to the display). Thus for example, the user can point to icons or other displayed features from apparently underneath the display by touching the rear touch panel at the corresponding position.

It will be appreciated that unlike a laptop touch panel, the rear touch panel has a substantially 1:1 scale relationship with the screen, thereby not just enabling motion of a mouse pointer on screen that corresponds to motion of touch on the panel (for example), but furthermore also enabling direct placement of such a mouse on the screen at the position corresponding to the touch on the panel, because as noted above the panel can be understood to represent the screen (i.e. act as a proxy). In other words, the rear touch panel has substantially the same size, shape and orientation as the screen. However, it is possible in other embodiments that the rear touch panel could have a different size, for example being smaller than the screen. In this arrangement, however, maintaining substantially the same shape and orientation as the screen means that the user can easily relate portions of the rear touch panel to corresponding screen positions. If the rear touch panel is smaller than the screen it does not have to be positioned on the device symmetrically behind the screen, but it can aid use of the device if the rear touch panel at least mainly overlaps the screen position.

Because of the relative orientation of the display and the rear touch panel, left-to-right mapping across the rear touch panel is therefore reversed to correspond to the appropriate position on the display. This means that detection of a movement in a certain side to side direction (as viewed when looking at the back of the device) has to be reversed in order that the movement can be applied to a screen event which is viewed from the front of the device. In other words, a left to right movement (as viewed from the rear) actually corresponds to a right to left movement as viewed from the front of the device. The user, holding the device so that the screen is facing him, perceives that he is moving his finger from right to left along the rear touch panel, but the panel itself, facing away from the user, detects this movement as a left to right movement. This movement detection is therefore reversed before being applied to a screen event, in order that the screen event (e.g. moving a cursor) occurs from right to left as seen by the user.

Optionally this direction reversal is switchable depending on the orientation of the device as detected by the motion input unit, and/or according to what peripheral devices are connected; for example if the PED were connected to a television and then held display-down for use, the left-to-right mapping of the touch panel input may not be reversed because the rear touch panel would then in fact be on the top of the device, facing the user.

Use of the rear touch panel as a proxy for the display advantageously allows interaction with the graphical output of the device without the user's hand or fingers obscuring the display or marking the display window.

In addition, the subjective experience of controlling the displayed interface from behind or underneath the screen allows for new modes of user interaction; for example selection, highlighting or magnification of a screen element may be achieved by a user pushing the element 'toward' them (i.e. with finger pressure on the rear panel) from behind the device. For a capacitance based touch panel, an increase in pressure on the rear panel (i.e. a push) can be detected by a flattening of the user's finger, which results in a larger covered area and hence more points of intersection in the panel having reduced capacitance. Conversely a reduction in pressure reduces the number of intersection points where touch is detected.

In conjunction with a similar but transparent front touch sensitive surface overlaid on the display, further modes of interaction become possible. For example, objects may be selected by being pinched between thumb and forefinger, with the thumb and forefinger touching the front and back touch panels respectively. The object may then be moved around, and, for example, activated by using a squeezing action between thumb and forefinger.

As noted previously, further modes of interaction can rely on the correspondence between position and / or motion of the user's fingers on the two touch panels. For example in a video playback application, stroking a finger across only the top touch panel may be interpreted as a fast-forward or rewind command (depending on direction), whilst a pinch hold followed by corresponding movement left or right of both fingers may be interpreted as selection of a specific point in playback (i.e. where the total playback time is scaled to the width of the touch panels). By contrast, however, a pinch hold followed by both fingers moving in opposite directions to each other may be interpreted as a twisting action, and adjusts a virtual volume dial. A similar grammar of interaction could be used for example for document or e-book navigation, with scrolling, page selection and zoom replacing the above playback functions.

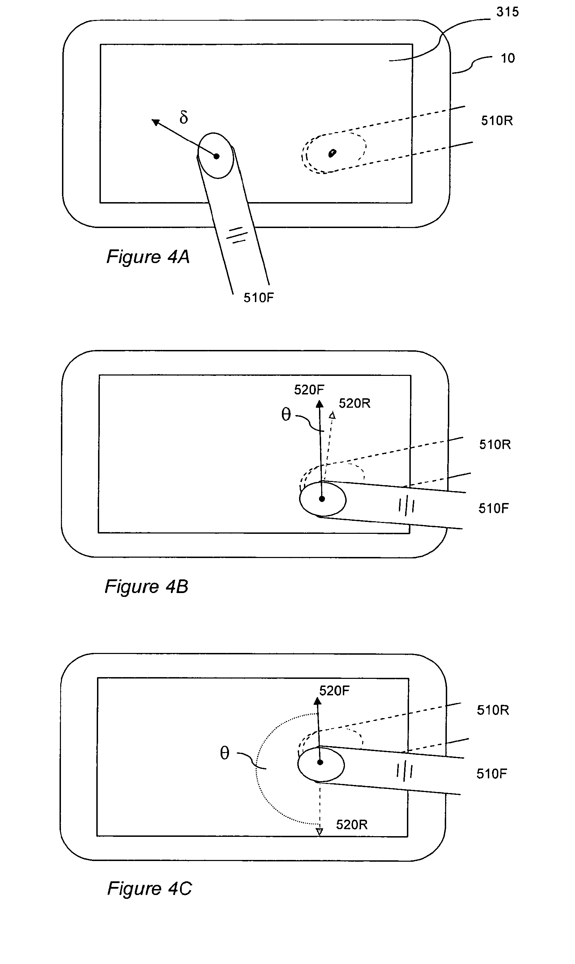

Referring now to Figure 4A, a user touches the front touch screen 315 with a first finger 510F, and touches the rear touch panel with a second finger 510R (shown in dotted line because it is in fact behind the PED 10). The terms "first" and "second" fingers are used here simply to differentiate between two different fingers ― they do not imply the identity of the particular fingers in use.

The surface input controller 330 (or the CPU 100 operating as the surface input controller) detects the touches on each surface and, potentially in cooperation with the CPU 100, starts to check for correlations of movement between the detected touches.

In a first example shown in Figure 4A, one of the touches (for example by the finger 510R on the rear panel) might be simply part of the grip that the user has chosen to hold the device, and hence is largely static. This lack of movement can be detected (for example as being less than a threshold displacement from a starting position during a continuous touch over a certain period of time).

As a result, a movement *δ* of the user's finger 510F over the front touch screen is in effect uncorrelated (or has a null correlation) with the static touch maintained by the user's finger 510R on the rear touch panel. In this case, in an embodiment of the present invention the user's inputs to (movements on) the front touch screen can therefore be interpreted in a conventional manner without reference to usage of the rear panel.

Referring now to Figures 4B and 4C, however, if the user moves both fingers over the respective touch sensitive surfaces, it becomes possible to detect whether there is a correlation between these movements.

In an embodiment of the present invention, a correlation measurement is carried out as follows:
i. record a start position for each finger, i.e. a position where the first touch (of a current continuous touch) was made;
ii. record the current position of each finger;
iii. calculate the vector between the respective start and current position for each finger (510F 510R, referring to the front and rear touches respectively); and
iv. take the cosine of the angle θ between these vectors. (The angle between two vectors can of course be established in either direction, giving two possible answers that together sum to 360 degrees. As an arbitrary rule to allow a choice between these two candidate answers, here the smaller of the two angles is considered to be the angle θ, giving θ a possible range of 0 to 180 degrees. However, use of the cosine function in fact means that this choice does not matter, as cosine (x) = cosine (360 ― x) in degrees. So, the angle could instead be established by selecting an arbitrary one of the vectors and detecting the angle in (say) a clockwise direction to the other one of the vectors)

Consequently, if the two fingers follow each other perfectly, the angle θ is zero and so the cosine is +1, indicating perfect positive correlation. In Figure 4B, the finger movements are similar and follow each other quite closely, resulting in an angle θ of 7 degrees and a cosine value of +0.99.

Conversely, if the two fingers diverge from each other completely, the angle θ is 180 degrees and so the cosine is -1, indicating exact negative correlation. In Figure 4C, the finger movements are dissimilar and move in almost opposite directions, resulting in an angle θ of 176 degrees and a cosine of minus 0.99.

Thus the device can detect that there is a strong positive correlation between the fingers if the cosine is greater than a threshold value, and the device can similarly detect a strong negative correlation between the fingers if the cosine is below a threshold value, thereby categorising the correlated movements into "strong positive" and "strong negative" correlations respectively. Alternatively, the device can detect a strong correlation if the absolute value of the cosine is above a threshold value, and determine whether the correlation is positive or negative from the sign of the cosine value.

Consequently, the device can also categorise a 'no correlation' condition as any correlation failing to satisfy the above threshold tests, or alternatively it can positively categorise a 'no correlation' condition as being when the correlation value is very low (as a non-limiting example, a cosine value between ± 0.2, and/or where one of the touch surfaces detects less than a threshold displacement amount of movement).

The categorisation process can be arranged so that it is not initiated by the device unless a minimum threshold amount of movement is detected on either touch sensitive surface, and the respective movements on each touch sensitive surface start within a threshold proximity on one another.

It will be appreciated that the cosine step can be omitted, and simply the angle can be used to determine a correlation; as a non limiting example, an angle of less than 30 degrees between the vectors could be interpreted as a sufficiently strong positive correlation, whilst in an arrangement (see above) in which θ is constrained to a range of 0 to 180 degrees, an angle of more than 150 degrees could be used to categorise a clear negative correlation. Similarly an angle between 70 and 110 degrees could be used to categorise no correlation.

In general, a similarity condition (which may be expressed as a dissimilarity condition in the case of negative correlation) is applied to achieve the categorisation. Preferably the similarity condition relates to an angle between the two movements as described above, but other conditions (for example relating to x and y components of relative displacements) could be applied.

It will also be appreciated that the vectors can be re-calculated periodically, i.e. not just from the position where motion first started, but from periodically sampled initial positions. Here, "periodic" can mean periodic in time, for example every 0.2 seconds, or periodic in displacement or motion, for example every 0.5cm of finger motion, or a periodicity based on the first of these two conditions to occur at any time. When the vectors are reset, the initial touch position for a vector is reset to the current touch position. This is of particular benefit where correlation is to be evaluated between traced gestures on the touch surfaces that are not intended to be straight lines; a periodic sampling allows curved gestures to be characterised as a series of short straight vectors. Alternatively, other correlation techniques may be used as appropriate by the skilled person.

The threshold value or values chosen may be a function of empirical tests, and/or may be a function of device size, the position of the touch surfaces with respect to the edge of the device and other factors. For example, the thresholds for deciding whether there is correlation could be relaxed if one or both of the touches is detected to be within a certain distance (e.g. 1cm) of the edge of its respective panel. The term "relaxed" in this context means that a greater range of angles are detected as indicating correlation, than the situation when the thresholds have not been "relaxed". The threshold for positive and negative correlation may be different, depending on the biomechanics of hand movement with respect to the device. The purpose of the thresholds in practice is to distinguish intentional positively or negatively correlating movements from unintentional or incidental movements by the user.

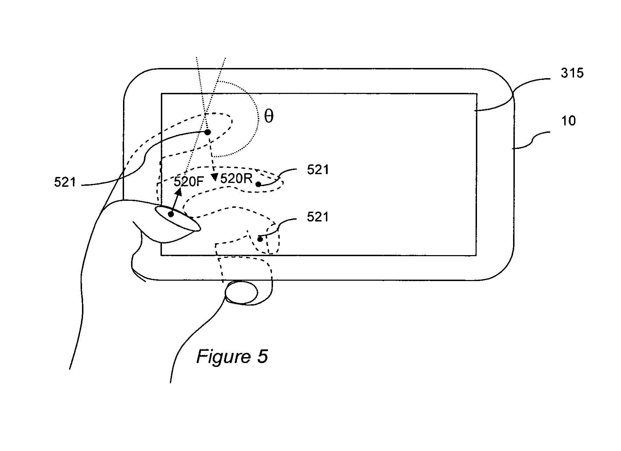

The use of a vector-based method such as that described here means that it is not important to the correct evaluation of correlation whether the two fingers start in the same positions on their respective touch sensors, or whether the amount of movement over the touch surfaces is the same on each side of the device. This is of particular benefit when the device is being operated for example by a thumb on the front side of the device and by an index finger on the rear side of the device, as seen in Figure 5.

In Figure 5, the thumb (shown as 510F) makes a short upward motion from near the bottom of the touch screen, whilst the index finger (shown as 510 R) makes a large downward motion from near the top of the rear touch panel. However, the angle between the resulting vectors can still easily be calculated to be in this example 163 degrees, the cosine of which is minus 0.96. If this value lies outside the relevant threshold range then the combined motion is categorised as an intentional action by the user.

It will be remembered that the horizontal or transverse component of the vector computed for one of the touch sensitive surfaces is reversed (as described above) before comparison with the vector from the other surface, to account for their respective orientations on the device. In this case it does not matter for which surface the horizontal component is reversed, as it is solely for the purpose of vector comparison. The general principle is that as the user holds the device, i.e. normally looking at the display, movements perceived by the user to be in the same direction are detected by the device to be in the same direction. However, preferably the horizontal component of the rear touch panel is reversed as this will then also make the result consistent with (and potentially enable it to drive) any visual display of the rear-panel motion.

It will be appreciated from Figure 5 that multi-touch detection may be used, and each point of touch (indicated by a small filled circle 521 for each finger) can be evaluated. Typically, most of the touches will be static and result from how the user holds the device. However, if one or more tracks of movement over either touch sensitive surface are detected then correlation can be evaluated. In order to differentiate and allocate meaning to multiple tracks, it can be assumed that each pair of potentially correlated front and rear tracks will be those physically closest to one another (in terms of the front-to-back overlap of their positions if the rear touch panel lies exactly behind the front panel, or in terms of equivalent positions with reference to the respective size and position of the panels otherwise) ― i.e. closer to one another than to a second pair of tracks. For example, one pair of tracks may be to the left half of the device whilst another pair of tracks are to the right half of the device (both left and right being as viewed from the front of the device), corresponding to a two-handed hold of the device by the user; alternatively or in addition, each track on one side can be compared with the or each track on the other side of the device to select which candidate track pair(s) have the greatest (positive or negative) correlation. These approaches can also be used in the case where there are more motion tracks on one side of the device than on the other, where it can be assumed that the surplus tracks are unintentional or incidental.

For either the multi-touch or single touch implementations above, further refinements are possible.

Thus, in an embodiment of the present invention, the device does not evaluate correlation between movements on the front and rear touch surfaces until a minimum amount of moment has been tracked for each surface. This will reduce any existing rate of false-positive detections for correlation, and also enables a more accurate estimation of the movement vector for each track on the surface, thereby also providing a more accurate basis for the correlation estimate.

Alternatively or in addition a possible safeguard (or a method of activating this mode of input) is to require that movements by fingers on the front and rear surfaces begin within a threshold proximity of each other (and optionally in a predetermined area of the touch surfaces), thereby requiring a positive action on the part of the user to initiate the input. Optionally such a safeguard is then suspended for a time period so that the device is more responsive to any subsequent correlation-based inputs once the user has demonstrated their wish to use this input mechanism. The time period may be a counter that is re-set each time a subsequent correlation-based input occurs, with the safeguard only being re-activated if the counter reaches a threshold value.

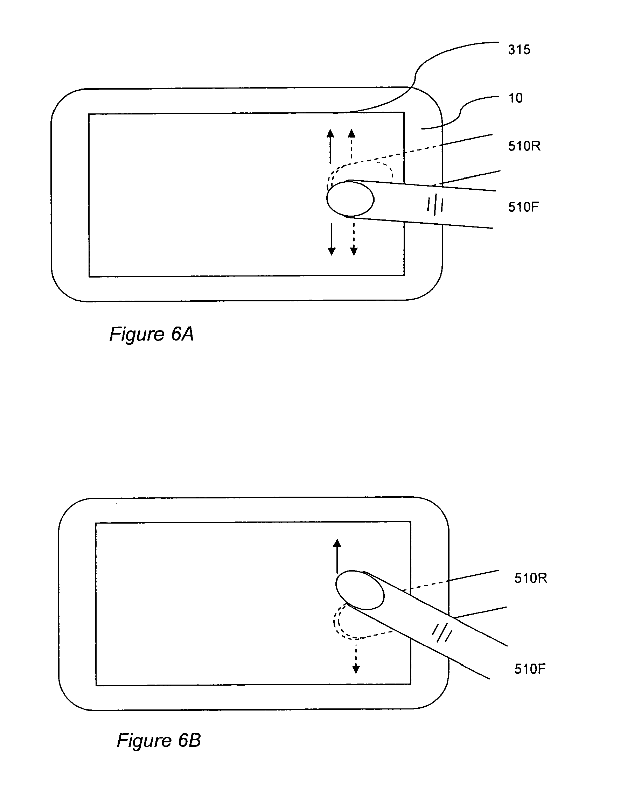

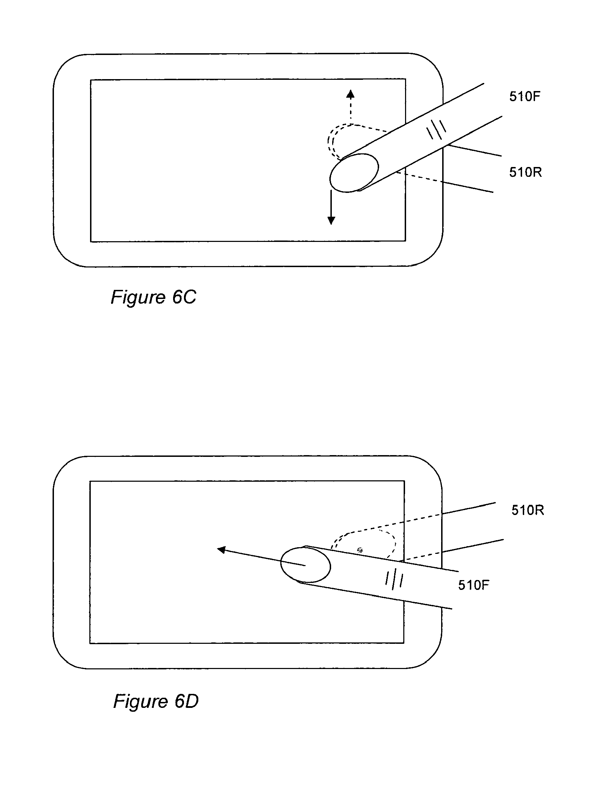

The ability to provide inputs to a device based upon the (positive, negative or null) correlation between touches on front and rear touch sensitive surfaces of a device provides scope for a variety of new modes of input. Referring now to Figures 6A to 6D, examples include:
- Using a so-called 'pinch hold' as seen in Figure 6A, and moving the front and rear fingers together in substantially the same direction (both upwards or both downwards as shown schematically in Figure 6A) to generate a positive correlation; this can then be interpreted as an input to cause a conventional scroll action, allowing the user to move around a document or a game world, or scroll through a web page or menu options.
- Using the pinch hold, and as seen in Figures 6B and 6C, but moving the front and rear fingers in substantially opposite directions to generate a negative correlation. This could again be interpreted as a scroll action (subjectively a turning or twisting action, with the scroll direction corresponding to the direction of movement on the front surface), but for example could correspond to a much higher rate or multiple of scroll speed than that associated with Figure 6A. Thus the user experience would be to use a twisting action (Figures 6B, 6C) to rapidly scroll through a document, and then use a pulling action (Figure 6A) to exactly position the document at a point of interest.
   - In either case, the amount of scroll can be made proportional to the average size of the input motion vectors. Where the scroll action in the application is vertical only, then only the vertical component of the average vector is used to control the scroll. Similarly if the scroll action is a horizontal panning action then only the horizontal component of the average vector is used to control the scroll. By contrast where free scrolling in any direction is allowed (for example when navigating a map of a game environment) then the average vector directly determines the direction of scroll.
   - It will be further appreciated that instead of the average vector, optionally only the vector for the motion over the front touch screen may be used for control, on the assumption that this is likely to be the motion the user expects to see.
- Again using the pinch hold, and as seen in Figure 6D, moving only the front finger (for example, inwards in Figure 6D) whilst holding the rear finger static to generate a null correlation. Where correlation-based inputs have recently occurred (e.g. within a threshold time period before detection of the movement shown in Figure 6D), this may be interpreted as a 'selection' gesture. Thus in this example, the user can rapidly (Figures 6B and 6C), then slowly (Figure 6A) navigate a document or list, before selecting (Figure 6D) an element of that document or list (or game space or the like), all without letting go of the device, or tapping any real or virtual button.

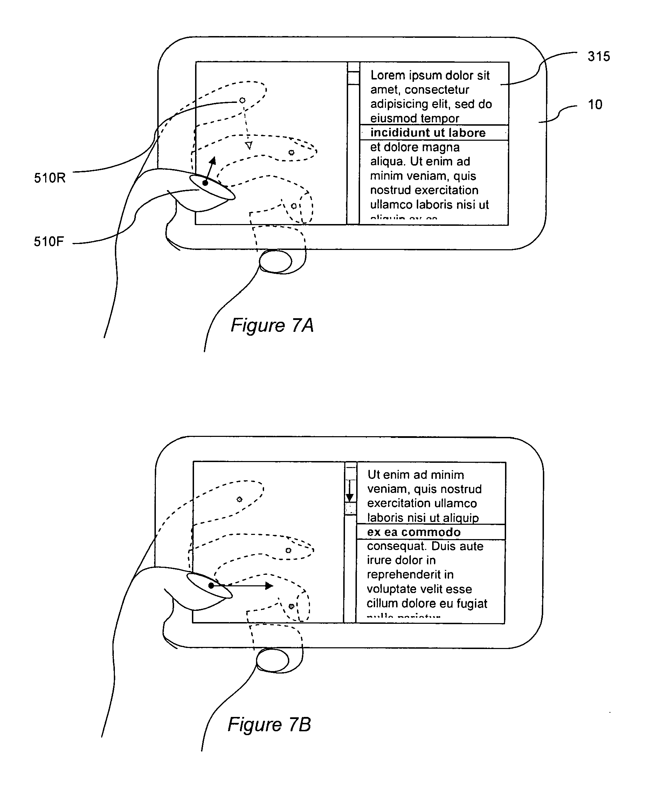

Referring now to Figures 7A and 7B, a similar example is shown where by use of thumb 510F and forefinger 510R moving in opposite directions, a user can scroll though a document such as a contacts list (Figure 7A), before using just their thumb 510F in a generally horizontal movement similar to that shown in Figure 6D to select one contact to call (Figure 7B), thereby enabling single-handed control of the device without the need to break contact with the device's touch screen.

Other modes of input will be apparent to the skilled person. For example, in a first-person shooting game, moving both front and rear fingers together left or right is interpreted as a strafing (horizontal) motion, whilst moving the front and rear fingers in opposite directions is interpreted as a twisting (rotating) motion, turning the player's viewpoint around on the spot. Likewise, examples for media playback have been mentioned previously herein, and it will be appreciated that use of such correlated inputs to skip tracks, for example, also make it simpler to control the device from inside a pocket without direct visual reference to buttons on the display or the use of a remote control.

Finally, it will be appreciated that where one or both of the touch sensitive surfaces are able to detect changes in applied pressure, the use of pressure to select or enact a function may also be considered. Notably this may be easier for the user to do when performing positively correlated motions on the device (resembling, for example, a pinch hold followed by a pinching pressure action) but may be more difficult where fingers have diverged following a negatively correlated motion; however the designer of the user interface can select a grammar of inputs and selections that accommodate this.

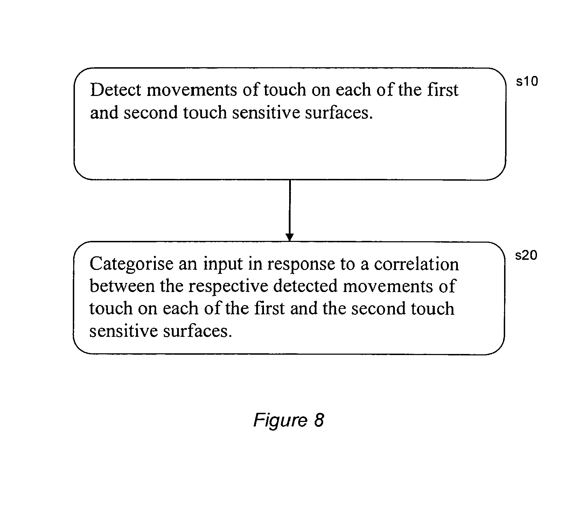

Referring now to Figure 8, a method of controlling a device of the type described above comprises:
in a first step s10, detecting movements of touch on each of the first and second touch sensitive surfaces; and
in a second step s20, categorising an input in response to a correlation between the respective detected movements of touch on each of the first and the second touch sensitive surfaces.

It will be apparent to a person skilled in the art that variations in the above method corresponding to operation of the various embodiments of the apparatus as described and claimed herein are considered within the scope of the present invention, including but not limited to:
- categorising inputs in response to the detection of a positive correlation or a negative correlation, or of no correlation (which may be either an absence of the first two categories or a distinct third category with its own qualifying criteria);
- characterising motion over a touch sensitive surface in terms of a vector between an initial point (for example the point of first motion or a periodically sampled touch position) and a current point. For periodic sampling, the selected current point can become the next initial point;
- correlating motion over the two touch sensitive surfaces on the basis of the resulting two vectors
   - the correlation typically corresponds to an angle between the vectors or equivalently between values generated by a function operating on that angle, such as a cosine function
      - in this case, positive and negative correlations correspond to acute and obtuse angles respectively within a given range that is typically determined empirically though usage studies. Meanwhile null correlations can correspond to approximately orthogonal vectors;
      - because the front and rear touch surfaces face in opposite directions, the horizontal component of one vector needs to be reversed to properly match what the user subjectively intends when they move their fingers over the two surfaces;
- detecting a positive correlation when the detected movement of touch across each of the first and second touch sensitive surfaces satisfy a similarity condition
   - such as the acute angle range between vectors noted previously;
- detecting a negative correlation when the detected movement of touch across each of the first and second touch sensitive surfaces satisfy a dissimilarity condition
   - such as the obtuse angle range between vectors noted previously;
- treating touch inputs where there is no significant correlation between front and rear movement (or where there is no significant motion on one of the front or rear touch panels), as a conventional touch input as known in the art;
- using the positively, negatively and non-correlating inputs to control functions such as navigating through documents or menus, and adjusting parameters such as audio volume.

Finally, it will be appreciated that the methods disclosed herein may be carried out on suitable hardware adapted as applicable by software instruction or by the inclusion or substitution of dedicated hardware.

Thus the required adaptation to existing parts of a conventional equivalent device may be implemented in the form of a computer program product or similar object of manufacture comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the device.

## Claims

1. A portable electronic device, comprising:
a first touch sensitive surface on a first, front side of the device; and
a second touch sensitive surface on a second, rear side of the device substantially opposite the first side;
movement detection means arranged in operation to detect movement of touch across each of the first and second touch sensitive surfaces; and
input parsing means arranged in operation to categorise an input in response to a correlation between the respective detected movements of touch across each of the first and the second touch sensitive surfaces.

2. A portable electronic device according to claim 1, in which the input parsing means categorises an input responsive to a positive correlation, or a negative correlation, or no correlation.

3. A portable electronic device according to claim 1 or claim 2, in which a positive correlation is detected when the respective detected movements of touch across each of the first and second touch sensitive surfaces satisfy a similarity condition.

4. A portable electronic device according to any one of claims 1 to 3, in which a negative correlation is detected when the respective detected movements of touch across each of the first and second touch sensitive surfaces satisfy a dissimilarity condition.

5. A portable electronic device according to any one of the preceding claims, in which the movements of touch across each of the first and second touch sensitive surfaces are characterised as respective first and second vectors between a respective initial touch position and a current touch position on each of the first and second touch sensitive surfaces.

6. A portable electronic device according to claim 5, in which the movement detection means is operable periodically to reset the initial touch position to a current touch position.

7. A portable electronic device according to claim 5 or claim 6, comprising:
correlation evaluation means operable to evaluate a correlation between a respective vector from each touch sensitive surface as a function of the angle between these vectors;
in which the horizontal component of one of the vectors is reversed prior to evaluation, so that motions on the front and back of the device in the same lateral direction with respect to the device are detected as being in the same lateral direction.

8. A portable electronic device according to claim 7, in which the input parsing means is operable to detect a positive correlation when the angle between the vectors, when constrained to lie in a range of 0 to 180 degrees, is less than a threshold angle.

9. A portable electronic device according to claim 7 or claim 8, in which the input parsing means is operable to detect a negative correlation when the angle between the vectors, when constrained to lie in a range of 0 to 180 degrees, is greater than a threshold angle.

10. A portable electronic device according to any one of the preceding claims, in which when a touch input is categorised as having no correlation, the device is arranged in operation to treat that input as a conventional touch-based input.

11. A portable electronic device according to any one of the preceding claims, in which the input parsing means is operable to categorise an input subject to one or more conditions selected from the list consisting of:
i. a minimum threshold amount of movement being detected on either touch sensitive surface; and
ii. the respective movements on each touch sensitive surface starting within a threshold proximity of one another.

12. A method of controlling a portable electronic device comprising a first touch sensitive surface on a first, front side of the device and a second touch sensitive surface on a second, rear side of the device substantially opposite the first side, the method comprising the steps of:
detecting movements of touch on each of the first and second touch sensitive surfaces;
and
categorising an input in response to a correlation between the respective detected movements of touch on each of the first and the second touch sensitive surfaces.

13. A method according to claim 12, in which the step of categorising an input comprises categorising an input as corresponding to a positive correlation, a negative correlation, or no correlation.

14. A method according to claim 12 or claim 13, in which the step of categorising an input comprises the step of:
evaluating a correlation between respective movement vectors derived from detected movement on each of the first and second touch sensitive surfaces as a function of the angle between these vectors;
in which the horizontal component of one of the vectors is reversed prior to evaluation.

15. A computer program for implementing any one of claims 12 to 14.
